# EUROPÄISCHE PATENTSCHRIFT

(11) **EP 3 231 675 B1**
(45) Veröffentlichungstag und Bekanntmachung des Hinweises auf die Patenterteilung: **20.02.2019**
(21) Anmeldenummer: 17166166.3
(22) Anmeldetag: 12.04.2017
(51) Int. Cl.: B60S 3/06

(54) **BÜRSTENSCHWENKVORRICHTUNG, SEITENWASCHBÜRSTE UND DAMIT AUSGESTATTETE FAHRZEUGWASCHANLAGE**
BRUSH PIVOTING DEVICE, SIDE WASHING BRUSH AND VEHICLE WASHING INSTALLATION EQUIPPED WITH SUCH A DEVICE
POSITIONNEUR DE BROSSE, BROSSE LATÉRALE DE LAVAGE ET STATION DE LAVAGE DE VÉHICULE EN ÉTANT ÉQUIPÉE

(30) Priorität: 12.04.2016 DE 202016101927 U
(43) Veröffentlichungstag der Anmeldung: 18.10.2017
(73) Patentinhaber: Otto Christ AG, 87734 Benningen (DE)
(72) Erfinder: CHRIST, Markus, 87700 Memmingen (DE)
(74) Vertreter: Ernicke, Moritz

(56) Entgegenhaltungen:
- WO-A1-2016/030218

## Beschreibung

Die Erfindung betrifft eine Bürstenschwenkvorrichtung zum Ausschwenken mindestens einer Seitenwaschbürste einer Behandlungsanlage für Fahrzeuge gegenüber der Vertikalrichtung.

Die Behandlungsanlage gemäß der vorliegenden Offenbarung ist bevorzugt eine Autowaschanlage oder eine Lkw-Waschanlage mit einem Portal, an dem mindestens eine Seitenwaschbürste sowie ggf. weitere Behandlungsaggregate angeordnet sind. Zwischen dem Fahrzeug und dem Portal kann eine Relativbewegung stattfinden. Bevorzugt ist das Portal verfahrbar. Alternativ oder zusätzlich kann eine Bewegung des Fahrzeugs relativ zum Portal vorgesehen sein, beispielsweise durch eine Schleppeinrichtung (Waschstraße) .

In der Praxis ist es bekannt, Fahrzeuge, insbesondere Autos mit verschiedenen Karosserieformen, Lkw oder Schienenfahrzeuge mit entsprechend ausgestatteten Behandlungsanlagen zu pflegen, insbesondere zu waschen, zu trocknen oder zu polieren.

Aus der gattungsgemäßen WO 2016/030 218 A1 ist eine Fahrzeugwaschanlage mit einer Seitenwaschbürste bekannt, die mittels einer Aufhängung um zwei Schwenkachsen drehbar an einer Traverse gelagert ist. Die Aufhängung umfasst zwei Stellantriebe zum Verschwenken der Seitenwaschbürste. Die Unterschiede in Karosserieformen und Größen der zu waschenden Fahrzeuge erschweren die Gewährleistung optimaler Waschergebnisse.

Aus der DE 43 34 132 A1 ist eine schenkbare Waschbürste bekannt, die um eine im Wesentlichen längs zum Fahrzeug verlaufende Achse gegenüber einem am Portal seitenbeweglich gelagerten Laufschlitten ausschwenkbar ist. Die dortige Seitenwaschbürste ist weiterhin als Knick-Bürste mit einer einzelnen und ebenfalls längs zum Fahrzeug ausgerichteten Knickachse ausgebildet. Durch einen zwischen dem Laufschlitten und dem oberen Bürstenteil wirkenden Stellzylinder kann der obere Bürstenteil zur Seite hin gegenüber der Vertikalen ausgeschwenkt werden. Die Waschbürste ist durch eine Parallelogramm-Führung mit dem Laufschlitten verbunden. Die Parallelogramm-Führung bewirkt, dass der untere Bürstenteil beim seitlichen Ausschwenken um die vorgenannte Knickachse gegengeschwenkt wird. Durch eine solche Knick-Bürste können diverse Karosserieformen mit eingezogenen Dach- oder Fensterbereichen zufriedenstellend gereinigt werden, wenn sich diese an den Seiten des Fahrzeugs befinden.

Eingezogene bzw. schräg gestellte Flächen treten allerdings bei modernen PKW und LKW auch im Front- und Heckbereich auf, wobei hier teilweise deutlich höhere Neigungswinkel vorliegen als an den Seiten. Besonders im Heckbereich besteht die zusätzliche Problematik, dass häufig oberhalb der Heckscheibe ein Spoiler angeordnet ist, wobei die in der Regel bei Waschanlagen vorgesehene Dachbürste einen Bereich unterhalb dieses Spoilers nicht oder nur mit unbefriedigendem Waschergebnis erreichen kann.

Aus der EP 0 808 753 A1 ist eine weitere Schwenkvorrichtung für eine Knick-Bürste bekannt, die zu den Seiten des Fahrzeugs hin ausschwenkbar ist. Außerdem ist hier vorgesehen, dass die gesamte Bürstenanordnung um eine vertikale Achse gedreht werden kann, sodass die bei der Behandlung der Seitenflächen des Fahrzeugs im Wesentlichen längs zum Fahrzeug ausgerichtete Schwenkachse sowie die dazu parallele Knickachse zur Behandlung der Front- oder Heckpartien eines Fahrzeugs um etwa 90 Grad drehbar sind, um auch dort eingezogene bzw. schräg gestellte Karosseriebereiche zu reinigen. Es sind also eine Schwenkachse und eine dazu parallele Knick-Achse vorgesehen, die gemeinsam entweder längs oder quer zum Fahrzeug ausgerichtet werden können.
Es ist Aufgabe der vorliegenden Erfindung, eine verbesserte Bürstenschwenkvorrichtung, eine damit ausgestattete Waschanlage sowie eine verbesserte Knick-Bürste aufzuzeigen.
Gemäß der vorliegenden Offenbarung wird vorgeschlagen, die Seitenwaschbürste einer Behandlungsanlage für Fahrzeuge zumindest um eine im Wesentlichen quer zum Fahrzeug verlaufende Achse gegenüber dem am Portal verschieblichen Laufschlitten ausschwenkbar zu lagern und eine Bürstenschwenkvorrichtung vorzusehen, die eine gesteuert bewegbare Führungsschiene und ein auf die Seitenwaschbürste wirkendes Hebelelement aufweist. Die Führungsschiene erstreckt sich im Wesentlichen quer zum Fahrzeug und ist entlang einer Schwenkkurve bewegbar, die um die Schwenkachse der Bürste verläuft. Das Hebelelement ist derart mit der Führungsschiene gekoppelt, dass eine Bewegung der Führungsschiene entlang der Schwenkkurve eine Mitnahme des Hebelelements und damit ein Ausschwenken der Seitenwaschbürste um die Schwenkachse bewirkt.

Darüber hinaus kann die aus DE 43 34 132 A1 bekannte im Wesentlichen längs zum Fahrzeug ausgerichtete Schwenkachse als zweite Schwenkachse vorgesehen sein. Ferner kann der aus DE 43 34 132 A1 bekannte Stellantrieb zum Ausschwenken um diese zweite Schwenkachse vorgesehen sein, welcher zwischen dem Laufschlitten und der Seitenwaschbürste wirkt.

Durch die Führungsschiene und das Hebelelement kann die Betätigungskraft zum Ausschwenken der Seitenwaschbürste um die quer zum Fahrzeug ausgerichtete erste Schwenkachse, d.h. zum Ausschwenken der Bürste in Fahrzeugrichtung nach vorne oder hinten, mit einer größeren wirksamen Hebellänge aufgebracht werden, als dies mit dem aus dem Stand der Technik bekannten Zylinder der Fall ist, der zwischen der Laufkatze und dem oberen Bürstenteil wirkt. Die zum Ausschwenken der Bürste aus der Vertikalrichtung aufzubringenden Kräfte brauchen ferner nicht über die Laufkatze abgestützt zu werden. Hierdurch werden verschiedene Vorteile erreicht.

Einerseits brauchen die Laufkatze und die zu deren Führung vorgesehene Laufschiene im Vergleich zur EP 0 808 753 A1 weniger robust ausgeführt zu werden, was zu einer deutlichen Gewichtseinsparung führt. Auch die ein oder mehreren Antriebe zur gesteuerten Bewegung der Führungsschiene können stationär am Portal angeordnet werden und es bedarf keines weiteren Antriebs zum Drehen der Bürstenanordnung. Auf diese Weise wird eine besonders leichte und bewegliche Bauform für die Seitenwaschbürste ermöglicht, sodass die Bürste bei deutlich geringerem Energieverbrauch bewegt werden kann. Ferner kann die wirksame Höhe der Seitenwaschbürste vergrößert werden, sodass bei gleicher Portalhöhe größere Fahrzeuge gereinigt werden können.

Die stationäre Lagerung der Antriebe für die Bewegung der Führungsschiene am Portal, insbesondere an den Protalsäulen, wirkt sich auch positiv auf das Waschergebnis aus. Ein zwischen Laufkatze und Seitenwaschbürste wirkender Stellantrieb erzeugt beim Ausschwenken Schwingungen in der Seitenwaschbürste und/oder in der Laufkatze, durch die das Waschergebnis und/oder der Betrieb der Behandlungsanlage beeinträchtigt werden können. Dies ist insbesondere dann der Fall, wenn der Schwenkwinkel während der Anlage der Seitenwaschbürste am Heck- oder Frontbereich des Fahrzeugs verändert oder nachgeregelt wird, beispielsweise weil das Fahrzeug schräg in der Behandlungsanlage angeordnet ist. Diese Schwingungen beeinträchtigen das Waschergebnis und können eine Momentensteuerung zum Anlegen der Waschbürste an die Fahrzeugoberfläche stören.

Durch die Bürstenschwenkvorrichtung gemäß der vorliegenden Offenbarung werden derartige Schwingungen vermieden, einerseits weil ein deutlich günstigeres Hebelverhältnis für die Antriebe der Führungsschiene vorliegt, sodass geringere Kräfte oder Momente erzeugt werden müssen, und andererseits weil die Antriebe am Portal sicherer und schwingungsfrei abstützbar sind. Ggfs. kann eine Dämpfung für die Bewegung der Führungsschiene vorgesehen sein, um bspw. aus dem Kontakt zwischen Seitenwaschbürste und Fahrzeug erzeugte Schwingungen zu kompensieren.

Durch die Führungsschiene und das Hebelelement können im Vergleich zu den vorbekannten Stellantrieben zwischen Laufkatze und Bürste auch deutlich größere Kräfte zum Ausschwenken der Bürste aufgebracht bzw. abgestützt werden, sodass auch große Ausschwenkwinkel gegenüber der Vertikalen von beispielsweise 30 Winkelgrad, 45 Winkelgrad oder darüber ermöglicht werden. Auf diese Weise wird die Variabilität der Behandlungsanlage zur Anpassung an diverse Karosserieformen deutlich erhöht.

Große Ausschwenkwinkel erhöhen ferner die Länge des nutzbaren Waschbereichs, d.h. der maximalen Längenerstreckung, die durch die Seitenwaschbürsten zu erreichen ist. Die Bürstenschwenkvorrichtung gemäß der vorliegenden Offenbarung kann mit entsprechenden Seitenwaschbürsten an bestehenden Anlagen nachgerüstet werden, um die nutzbare Länge des Waschraums zu vergrößern. Es bedarf dabei keines kostenintensiven und aufwändigen Austauschs der bestehenden Laufschiene durch eine hochbelastbare Variante. Die Energieleitungen zur Versorgung der Antriebe der Führungsschiene können auf einfache Weise in den vorhandenen Leitungsführungen des Portals untergebracht werden.

In den Unteransprüchen, der nachfolgenden Beschreibung sowie den beigefügten Zeichnungen sind weitere vorteilhafte Ausbildungen der Erfindung angegeben.

Die Erfindung ist in den Zeichnungen beispielhaft und schematisch dargestellt. Es zeigen:
- Figur 1:: eine Längsschnittdarstellung einer Behandlungsanlage mit einer Bürstenschwenkvorrichtung und einer Seitenwaschbürste gemäß der vorliegenden Offenbarung;
- Figur 2:: eine Funktionsskizze zur Erläuterung des Ausschwenkens von zwei Seitenwaschbürsten in Abhängigkeit von einer Bewegung der Führungsschiene;
- Figur 3:: ein Mechanik-Schaubild zur Erläuterung einer Doppel-Parallelogramm-Führung einer Seitenwaschbürste gemäß der vorliegenden Offenbarung.

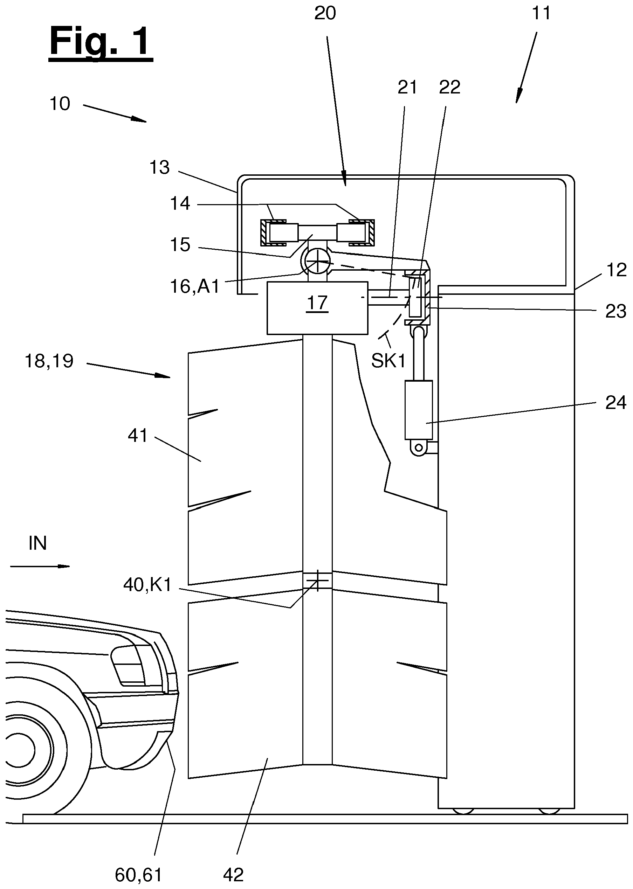

Figur 1 zeigt in einer vereinfachten Längsschnittdarstellung eine Behandlungsanlage (10) mit einer Bürstenschwenkvorrichtung (20) und einer Seitenwaschbürste (18) gemäß der vorliegenden Offenbarung. Eine zweite Seitenwaschbürste (19) mit im Wesentlichen gleicher Ausbildung ist hinter der ersten Seitenwaschbürste (18) angeordnet und somit nicht sichtbar.

Die Behandlungsanlage (10) umfasst ein Portal (11), das hier als auf einer Schiene verfahrbares Portal (11) mit zwei Portalsäulen (12) (nur eine Säule sichtbar) und einer Portaltraverse (13) ausgebildet ist. Die Portalsäulen (12) sind zur rechten und linken Seite eines zu reinigenden Fahrzeugs (60) bewegbar. Die Portaltraverse (13) erstreckt sich zwischen den Portalsäulen (12) und im Wesentlichen oberhalb des Fahrzeugs (60).

In oder an der Portaltraverse (13) ist eine Führungsschiene (14) angeordnet, die sich im Wesentlichen über die gesamte Breite des Waschbereichs quer zum Fahrzeug (60) erstreckt. An der Laufschiene (14) sind ein oder mehrere Laufschlitten (15) (auch Laufkatze genannt) angeordnet. Bevorzugt trägt jeder Laufschlitten eine Seitenwaschbürste (18, 19), die beispielsweise über ein Gelenk vertikal nach unten hängend gelagert ist. Ferner trägt der Laufschlitten (15) bevorzugt einen Bürsten-Drehantrieb (17). Der Bürsten-Drehantrieb (17) kann beliebig ausgebildet sein. Bevorzugt handelt es sich um einen Elektromotor, insbesondere einen über einen Frequenzumrichter mit Energie versorgten und in der Drehzahl stufenlos einstellbaren Wechselstrommotor. Besonders bevorzugt ist der Bürsten-Drehantrieb (17) als Direktantrieb ausgebildet, der ohne ein zwischengeschaltetes Getriebe ein oder mehrere Bürstenabschnitte (41,42) der Seitenwaschbürste (18,19) antreibt. Ggfs. können zwei oder mehr Bürsten-Drehantriebe (17) vorgesehen sein, die jeweils genau einen oder mehrere Bürstenabschnitte (41, 42) antreiben.

Die Seitenwaschbürste (18, 19) ist einerseits dazu ausgebildet, eine Seitenfläche des Fahrzeugs (60) zu reinigen. Hierfür kann die Seitenwaschbürste (18, 19) relativ zu dem Fahrzeug (60) in dessen Längsrichtung bewegt werden. Die Relativbewegung zwischen Seitenwaschbürste (18, 19) und Fahrzeug (60) in dessen Längsrichtung kann je nach Ausbildungsart der Behandlungsanlage durch eine gesteuerte Bewegung des Portals (11) und/oder eine Bewegung des Fahrzeugs (60) geschehen, beispielsweise durch eine geeignete Schleppvorrichtung einer Waschstraße.

Die Seitenwaschbürste (18, 19) kann ferner genutzt werden, um eine Fahrzeugfront (61) und/oder ein Fahrzeugheck (62) zu reinigen. Hierzu kann die Seitenwaschbürste (18, 19) im Wesentlichen vor oder hinter dem Fahrzeug (60) angeordnet und entlang der Laufschiene (14) quer zum Fahrzeug (60) bewegt werden.

Weiterhin ist ein Ausschwenken der Seitenwaschbürste (18, 19) gegenüber der Vertikalrichtung zur Behandlung einer Fahrzeugfront (61) und/oder eines Fahrzeughecks (62) vorgesehen, d.h. zumindest in Fahrzeugrichtung nach vorne oder hinten. Hierzu wird die Seitenwaschbürste (18,19) und insbesondere ein oberer Bürstenabschnitt einer als Gelenk-Bürste oder Knick-Bürste ausgebildeten Seitenwaschbürste (18,19) motorisch, d.h. gesteuert und angetrieben.

Die Seitenwaschbürste (18,19) ist hierzu im oberen Bereich gegenüber dem Laufschlitten (15) zumindest um eine im Wesentlichen quer zum Fahrzeug verlaufende erste Schwenkachse (A1) ausschwenkbar gelagert. Die schwenkbare Lagerung kann durch beliebige konstruktive Mittel erreicht werden. In dem Beispiel von Figur 1 ist ein Schwenk-Gelenk (16) vorgesehen, dass als drehfestes Kugelgelenk ausgebildet ist. Alternativ kann ein Kardangelenk vorgesehen sein, insbesondere mit einer Ausbildung nach DE 43 34 132 A1 oder EP 0 808 753 A1. Die Seitenwaschbürste (18,19) ist somit bevorzugt im Bereich des Schwenk-Gelenks (16) zusätzlich um eine im Wesentlichen längs zum Fahrzeug (60) ausgerichtete zweite Schwenkachse (A2) zur Seite hin ausschwenkbar gelagert. Die erste und die zweite Schwenkachse (A1, A2) sind bevorzugt in Ihrer Orientierung festgelegt, können aber in der Lage gemäß der Verschiebung des Laufschlittens (15) entlang der Laufschiene (14) und/oder gemäß der Verschiebung des Portals (11) in Längsrichtung zum Fahrzeug (60) veränderlich sein.

Die Behandlungsanlage (10) weist eine Bürstenschwenkvorrichtung (20) mit einer Führungsschiene (23) und einem auf die Seitenwaschbürste (18, 19) wirkenden Hebelelement (21) auf. Das Hebelelement kann bevorzugt Bestandteil der Seitenwaschbürste (18, 19), des Laufschlittens (15), eines Gehäuses des Bürsten-Drehantriebs (17) oder des Schenk-Gelenks (16) sein. Alternativ kann das Hebelelement (21) auf beliebige andere Art gebildet sein, beispielsweise als separates Bauteil, das kraftleitend mit der Seitenwaschbürste (18, 19) verbunden wird.

Die Führungsschiene (23) erstreckt sich im Wesentlichen quer zum Fahrzeug (60). Sie ist in der in Figur 1 dargestellten Ausgangslage ohne Ausschwenken (I) bevorzugt parallel zur ersten Schwenkachse (A1) ausgerichtet. Die Führungsschiene (23) ist derart gelagert, dass sie entlang einer um die erste Schwenkachse (A1) verlaufenden Schwenkkurve (SK1) bewegbar ist. Die Schwenkkurve (SK1) kann gemäß der beispielhaften Darstellung in Figur 1 eine Kreisbogenform haben. Diese Ausbildung ist vorteilhaft, wenn die erste Schwenkachse (A1) relativ zum Lagerschlitten (15) ortsfest durch ein einfaches Drehgelenk gebildet ist. Alternativ kann die erste Schwenkachse (A1) während des Ausschwenkens gegenüber dem Lagerschlitten (15) lageveränderlich sein, beispielsweise bei einer Bogenführung. Die Schwenkkurve (SK1) ist bevorzugt als Hüllkurve zu der Ausschwenkbewegung des Hebelelements (21) gebildet, das von der Seitenwaschbürste (18, 19) gemäß ihrer gelenkigen Aufhängung beim Ausschwenken aus der Vertikalrichtung mitgeführt wird.

Das Hebelelement (21) kann an einer beliebigen Stelle an der Seitenwaschbürste (18, 19) angreifen, bevorzugt in einem Bereich zwischen der ersten Schwenkachse (A1) und dem Bürstenbesatz des obersten Bürstenabschnitts (41). Alternativ kann das Hebelelement an einem über das Schwenk-Gelenk (16) bzw. über die erste Schwenkachse (A1) noch oben hin verlängerten Teil der Seitenwaschbürste (18, 19) angreifen (nicht dargestellt).

In dem Beispiel von Figur 1 ist das Hebelelement (21) am Gehäuse des Brüsten-Drehantriebs (17) angeordnet. Alternativ kann das Hebelelement (21) beispielsweise an einem Bürstenträger (31) der oberen Bürstenabschnitts (41) oder direkt am beweglichen unteren Teil des Schwenk-Gelenks (16) angreifen.

Das Hebelelement (21) ist mit der Führungsschiene (23) kraftleitend gekoppelt. Eine Bewegung der Führungsschiene (23) entlang der Schwenkkurve (SK1) bewirkt eine Mitnahme des Hebelelements (21) und damit ein Ausschwenken der Seitenwaschbürste (18, 19) um die quer zum Fahrzeug (60) verlaufende erste Schwenkachse (A1). In dem Beispiel von Figur 1 weist die Bürstenschwenkvorrichtung (20) einen oder bevorzugt zwei steuerbare Antriebe (24, 25) auf, um die Führungsschiene (23) entlang der Schwenkkurve (SK1) zu bewegen. Die Antriebe (24, 25) können beliebig ausgebildet sein. Sie sind bevorzugt als Linearantriebe und insbesondere als Hydraulik-Zylinder oder Pneumatik-Zylinder ausgebildet. Alternativ kann es sich um rotatorische Antriebe, Seilzüge oder dergleichen handeln. Weiterhin bevorzugt werden die Antriebe (24, 25) separat gesteuert.

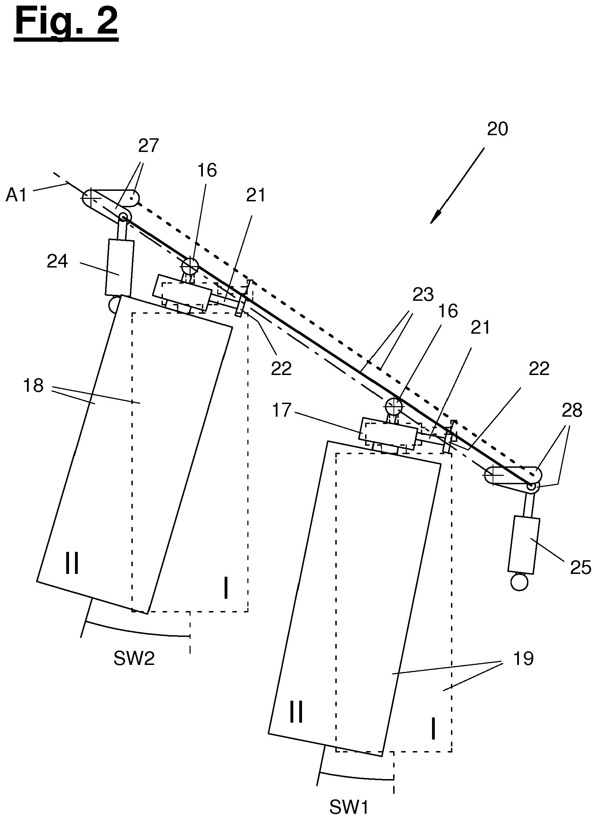

Figur 2 zeigt eine schematische Schrägbilddarstellung der Bürstenschwenkvorrichtung (20). Mit gestrichelten Linien sind zwei Seitenwaschbürsten (18, 19) mit jeweils einem Hebelelement (21) sowie eine Führungsschiene (23) in einer Ausgangslage ohne Ausschwenken (I) dargestellt. Mit einer durchgezogenen Linie sind dieselben Gegenstände in einer ausgeschwenkten Lage (II) dargestellt. Die Führungsschiene (23) ist aus Gründen der vereinfachten Darstellung als fett gezogene Linie dargestellt.

An den Hebelelementen (21) beider Seitenwaschbürsten (18, 19) ist jeweils ein Eingriffselement (22) endseitig angeordnet, über das einerseits die Kraftübertragung zur Führungsschiene (23) und andererseits eine Seitenbeweglichkeit quer zum Fahrzeug (60) entlang der Führungsschiene (23) geschaffen wird. Das Eingriffselement (22) kann beliebig ausgebildet sein. In dem Beispiel von Figuren 1 und 2 ist es als Laufrolle dargestellt. Alternativ kann es sich um Gleitlager oder Laufrollen-Paare handeln.

Die Führungsschiene (23) ist im Beispiel von Figur 2 durch stirnseitige Schwenkführungen (27, 28) gelagert. Beide Schwenkführungen (27, 28) sind hier beispielhaft als Hebel ausgebildet, die um die Schwenkachse (A1) der Seitenwaschbürsten (18, 19) drehbar sind. Mit anderen Worten ist die Schwenkachse (A1) eine gemeinsame Drehachse für die erste und die zweite Schwenkführung (27, 28) sowie die Seitenwaschbürsten (18, 19).

Die Führungsschiene (23) kann durch die Schwenkführungen (27, 28) oder beliebige andere Mittel während der Bewegung entlang der Schwenkkurve (SK1) in paralleler Ausrichtung zur ersten Schwenkachse (A1) gehalten sein.

Alternativ und bevorzugt kann die Führungsschiene (23) gegenüber der ersten Schwenkachse (A1) neigbar gelagert sein. In dem Beispiel von Figur 2 wird eine solche Neigung der Führungsschiene (23) durch unterschiedlich weites Verdrehen der ersten und der zweiten Schwenkführung (27, 28) erreicht. Das Maß der Neigung kann durch die separate Ansteuerung des ersten und des zweiten Antriebs (24, 25) vorgegeben bzw. geregelt werden.

In Folge der Neigung der Führungsschiene (23) wird ein Schwenkwinkel (SW1, SW2) der Seitenwaschbürste (18,19) in der Ausschwenk-Lage (II) gegenüber der Vertikalen in Abhängigkeit von der Position der Seitenwaschbürste (18, 19) entlang der Laufschiene (14) unterschiedliche ausfallen. Im Beispiel von Figur 2 ist die zweite Seitenwaschbürste (19) näher an dem (rechten) Ende der Führungsschiene (23) angeordnet, an der die zweite Schwenkführung (28) um ein verhältnismäßig geringes Maß verdreht ist. Dementsprechend weist die zweite Seitenwaschbürste (19) einen verhältnismäßig geringen Schwenkwinkel (SW1) auf. Die erste Seitenwaschbürste (18) ist demgegenüber näher an dem (linken) Ende der Führungsschiene (23) angeordnet, an dem die erste Schwenkführung (27) verhältnismäßig weiter verdreht ist. Dementsprechend weist die zweite Seitenwaschbürste (18) einen vergleichsweise größeren Schwenkwinkel (SW2) auf. Es ist leicht ersichtlich, dass der Schwenkwinkel der Seitenwaschbürste gemäß dem Maß der Neigung der Führungsscheine (23) bei einer Verschiebung entlang der Laufschiene (14) vergrößert oder verkleinert wird. Dementsprechend wird das untere Ende der Seitenwaschbürste (18, 19) und insbesondere ein unterer Bürstenabschnitt (42) eine Knick-Bürste gemäß der Neigung der Führungsschiene (23) weiter in Längsrichtung des Fahrzeugs (60) nach vorne oder hinten ausgelenkt. Die Neigung der Führungsschiene (23) kann somit genutzt werden, um die Seitenwaschbürsten (18, 19) einer schräg gestellten Fahrzeugfront (61) oder einem schräg gestellten Fahrzeugheck (62) anzupassen.

Gemäß einer bevorzugten Ausführungsvariante kann das Maß der Neigung der Führungsschiene (23) in Abhängigkeit von einer Schrägstellung des Fahrzeugs (60) innerhalb der Behandlungsanlage (10) angepasst und insbesondere geregelt werden. Die Schrägstellung des Fahrzeugs (60) bzw. eines Fahrzeughecks oder einer Fahrzeugfront kann auf beliebige Weise erfasst sein. Durch die Neigung der Führungsschiene (23) wird somit über der Quererstreckung einer Fahrzeugfront (61) oder eines Fahrzeughecks (62) jeweils genau ein solcher Schwenkwinkel (SW1, SW2) vorgegeben, dass ein optimaler Kontakt zwischen der Seitenwaschbürste (18, 19) bzw. einem unteren Bürstenabschnitt (42) und der Fahrzeugoberfläche gewährleistet wird.

Die Anpassung der Seitenwaschbürsten an eine Querstellung des Fahrzeugs (60) durch Neigung der Führungsschiene (23) ist besonders robust und einfach durchzuführen. Es bedarf insbesondere nicht eines kontinuierlichen oder intermittierenden Betätigens der Antriebe (24, 25). Vielmehr kann für eine in der Regel während des Waschvorgangs konstante Schrägstellung eine konstante Neigung der Führungsschiene (23) vorgegeben werden. Die Anpassung an die Schrägstellung des Fahrzeugs (60) erfolgt somit im Wesentlichen schwingungsfrei. Dies hat insbesondere den Vorteil, dass eine Momentensteuerung zur Anpressung der Seitenwaschbürsten (18, 19) senkrecht auf die Oberfläche des Fahrzeugs (60) nicht durch die überlagernden Kräfte zum Ausschwenken oder zum Anpassen der Ausschwenkung an die Schrägstellung beeinträchtigt wird.

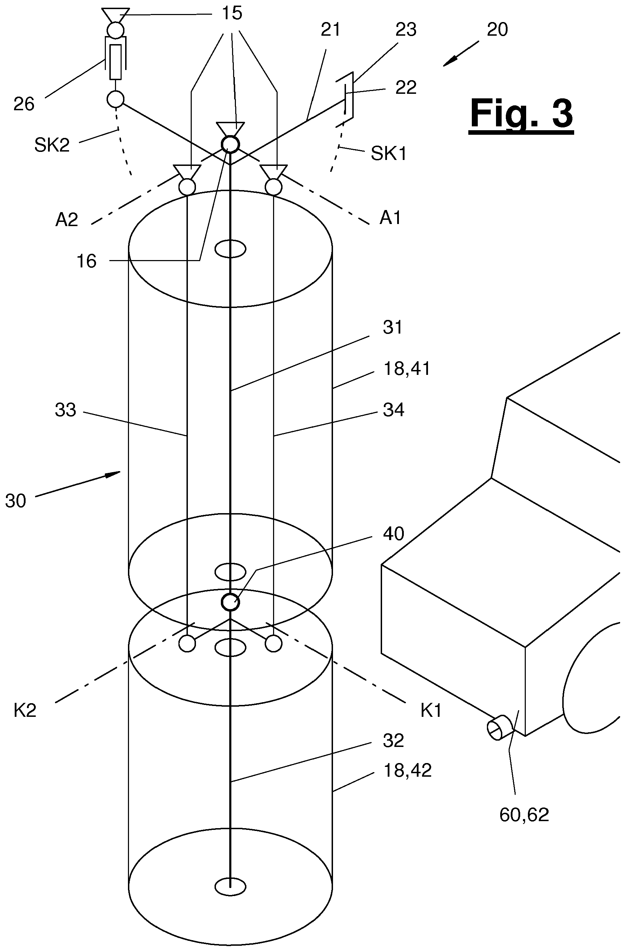

Figur 3 zeigt eine Erläuterungsdarstellung zur Mechanik einer Parallelogramm-Führung und insbesondere einer Doppel-Parallelogramm-Führung (30) für eine Seitenwaschbürste (18,19) bzw. eine Bürstenschwenkvorrichtung (20) gemäß der vorliegenden Offenbarung.

Ein Laufschlitten (15), an dem die Seitenwaschbürste (18,19) aufgehängt ist, ist in Figur 3 vereinfachend durch Lagerstellen (15) dargestellt. Das Gewicht der Seitenwaschbürste (18,19) wird hauptsächlich über das Schwenk-Gelenk (16) an dem Laufschlitten (15) abgestützt. Das Schwenk-Gelenk (16) weist die erste Schwenkachse (A1) sowie die zweite Schwenkachse (A2) auf, die quer und längs zum Fahrzeug (60) ausgerichtet sind. Ein Ausschwenken der Seitenwaschbürste (18,19) um die erste Schwenkachse (A1) wird über die Bewegung der Führungsschiene (23) entlang der ersten Schwenkkurve (SK1) und das Hebelelement (21) bewirkt. Zusätzlich kann an dem Laufschlitten (15) ein steuerbarer Schwenkantrieb (26) vorgesehen sein, der beispielsweise gemäß der Offenbarung in DE 43 34 132 A1 und EP 0 808 753 A1 ausgebildet ist. In Figur 3 ist der steuerbare Schwenkantrieb (26) beispielhaft als Hydraulikzylinder dargestellt. Dieser Schwenkantrieb (26) kann gegebenenfalls über ein weiteres Hebelelement an der Seitenwaschbürste (18,19) angreifen und diese um die zweite Schwenkachse (A2) ausschwenken, d.h. zu einer Seite (rechts/links) des Fahrzeugs (60).

Ein oberer Bürstenabschnitt (41) der Seitenwaschbürste (18) ist an einem oberen Bürstenträger (31) drehbar gelagert. Der obere Bürstenträger (31) ist mit dem Schwenk-Gelenk (16) verbunden und wird über die Bürstenschwenkvorrichtung (20, 21, 22, 23, 26) um die erste Schwenkachse (A1) und/oder die zweite Schwenkachse (A2) rotiert.

Eine Doppel-Parallelogramm-Führung (30) gemäß Figur 3 umfasst einen ersten Schwenkhebel (33) sowie einen zweiten Schwenkhebel (34) die im Wesentlichen parallel zu dem oberen Bürstenträger (31) ausgerichtet und geführt sind. Die Schwenkhebel (33, 34) verlaufen bevorzugt innerhalb des oberen Bürstenabschnitts (41). Beispielsweise kann der obere Bürstenträger (31) als Hohlkörper (Rohr) ausgebildet sein, in den ein oder beide Schwenkhebel (33, 34) längs-verschieblich eingeführt sind.

Die beiden Schwenkhebel (33, 34) sind am oberen Ende jeweils drehbeweglich und ortsfest mit dem Laufschlitten (15) verbunden. Ferner sind die beiden Schwenkhebel (33, 34) am unteren Ende jeweils drehbeweglich mit einem unteren Bürstenträger (32) verbunden, der einen unteren Bürstenabschnitt (42) der Seitenwaschbürste (18, 19) trägt.

Bei einem Ausschwenken des oberen Bürstenabschnitts (41) um die erste Schwenkachse (A1) wird der erste Schwenkhebel (33) parallel zu dem oberen Bürstenträger (31) geführt und gegenüber dem oberen Bürstenträger (31) linear verschoben. Dies resultiert aus der oberen Lagerung des Schwenkhebels am Laufschlitten (15) und der unteren Lagerung am unteren Bürstenträger (32). Der untere Bürstenträger (32) ist über das Knick-Gelenk (40) mit dem oberen Bürstenträger (31) verbunden und um die durch das Bürsten-Gelenk (40) gebildete erste Knick-Achse (K1) drehbar gelagert. Beim Ausschwenken des oberen Bürstenabschnitts (41) um die erste Schwenkachse (A1) wird mittels des ersten Schwenkhebels (33) eine Gegen-Schwenkbewegung des unteren Bürstenabschnitts (42) um die Knick-Achse (K1) bewirkt.

Entsprechend analog ist der zweite Schwenkhebel (34) im oberen Bereich ortsfest und drehbeweglich mit dem Laufschlitten (15) verbunden. Im unteren Bereich ist der zweite Schwenkhebel (34) mit dem unteren Bürstenträger (32) drehbeweglich verbunden. Bei einem Ausschwenken des oberen Bürstenabschnitts (41) um die zweite Schwenkachse (A2) wird durch den zweiten Schwenkhebel (34) analog eine Gegen-Schwenkbewegung des unteren Bürstenabschnitts (42) um die zweite Knick-Achse (K2) bewirkt.

Mit anderen Worten bewirkt die Doppel-Parallelogramm-Führung (30), dass ein unterer Bürstenabschnitt (42) bei einem Ausschwenken des oberen Bürstenabschnitts (41) um eine oder beide Schwenkachsen (A1, A2) jeweils korrespondierend um eine oder beide dazu parallele Knickachsen (K1, K2) gegengeschwenkt wird. Auf diese Weise wird der untere Bürstenabschnitt (42) stets in einer im Wesentlichen vertikalen Ausrichtung gehalten.

Wenn gegenüber dem in Figur 3 dargestellten Beispiel der zweite Schwenkhebel (34) weggelassen wird, liegt eine einfache Parallelogramm-Führung vor, wobei das Knick-Gelenk (40) etwaig nur eine einzelne Knick-Achse (K1) aufzuweisen braucht.

Die Führungsschiene (23) kann gemäß den Beispielen in den Figuren 1 bis 3 gegenüber einer Ausgangslage ohne Ausschwenken (I) in einer ersten Richtung beweglich sein, die dort jeweils durch die erste Schwenkkurve (SK1) dargestellt und nach unten gerichtet ist, um die Seitenwaschbürste (18,19) zu der Einfahrtseite (IN) der Behandlungsanlage (10) hin auszuschwenken. Dieses Ausschwenken ist besonders vorteilhaft, um einen Heckbereich (62) eines Fahrzeugs (60) zu waschen. Günstig ist es hierbei, wenn die mindestens eine Seitenwaschbürste (18, 19) auf der Einfahrtseite (IN) des Portals (11) angeordnet ist. Denn bei einer solchen Anordnung können die Portalsäulen (12) nicht die Ausschwenkbewegung der Seitenwaschbürsten (18, 19) behindern und es sind besonders große Schwenkwinkel (SW1, SW2) erreichbar, deren Maximum 30 Winkelgrad, 45 Winkelgrad oder mehr betragen kann.

Alternativ oder zusätzlich kann die Führungsschiene (23) gegenüber einer Ausgangslage ohne Ausschwenken (I) in einer zweiten und bevorzugt entgegengesetzten Richtung beweglich sein, um die Seitenwaschbürste (18, 19) von der Einfahrtsseite (IN) weggerichtet auszuschwenken. Eine solche Schwenkbewegung kann zum Reinigen einer Fahrzeugfront (61) besonders nützlich sein, insbesondere bei Kleinbussen, Vans und ähnlichen Fahrzeugen (60) mit einer stark schräg gestellten Frontscheibe und etwaig Motorhaube.

In dem Beispiel von Figur 1 ist die Führungsschiene (23) als C-Profil dargestellt. Innerhalb der Führungsschiene (23) ist zumindest eine Laufrolle (22) geführt. Bei einer solchen Anordnung wird das Hebelelement (21) bei einer Bewegung der Führungsschiene (23) in beiden Richtungen mitgenommen. Mit anderen Worten kann durch eine solche Konstruktion ein kraftgeführtes Ausschwenken sowie ein kraftgeführtes Einschwenken und/oder ein Ausschwenken in zwei entgegensetzten Richtungen, d.h. sowohl nach vorne als auch nach hinten bewirkt werden.

Gemäß einer alternativen Ausführungsvariante kann die Führungsschiene (23) derart ausgebildet sein, dass sie das Hebelelement (21) beim Ausschwenken der Seitenwaschbürste (18,19) nur einseitig mitnimmt. In dem Beispiel von Figur 1 könnte dies dadurch erreicht werden, dass der untere Führungsabschnitt des C-Profils (23) entfernt wird. In einem solchen Fall kann eine Seitenwaschbürste (18, 19) gegenüber dem durch die Führungsschiene (23) vorgegebenen Schwenkwinkel (SW1, SW2) noch weiter ausgeschwenkt werden, beispielsweise wenn ein zu hoher Anpressdruck zwischen der Waschbürste und der Oberfläche des Fahrzeugs (60) besteht. Dies kann zur Vermeidung von Beschädigungen vorteilhaft sein. Entsprechend umgekehrt könnte ein oberer Führungsabschnitt der Führungsschiene (23) aus Figur 3 weggelassen werden.

In Abwandlung zur Figur 3 kann der obere Lagerpunkt des ersten Schwenkhebels (33) durch einen weiteren Stellantrieb (nicht dargestellt) bewegbar sein, um die Gegen-Schwenkbewegung des unteren Bürstenabschnitts (42) zu beeinflussen. Der weitere Stellantrieb kann insbesondere durch eine weitere Führungsschiene und ein weiteres Hebelelement in Analogie zu der Führungsschiene (23) und dem Hebelelement (21) gebildet sein. Durch den weiteren Stellantrieb kann ein Aktivieren oder Deaktivieren sowie gegebenenfalls ein quantitatives Einstellen der Gegen-Schwenkbewegung des unteren Bürstenabschnitts (32) erfolgen. Somit können der obere Bürstenabschnitt (41) und der untere Bürstenabschnitt (42) jeweils separat an unterschiedliche Neigungen im Bereich der Fahrzeugfront (61) angepasst werden.

Die Behandlungsanlage (10) kann bevorzugt eine Erfassungsvorrichtung zur Erfassung einer Fahrzeugkontur aufweisen. Derartige Erfassungsvorrichtungen sind in unterschiedlichen Ausprägungen in der Praxis bekannt. Die Bürstenschwenkvorrichtung (20) kann bevorzugt derart gesteuert werden, dass ein Schwenkwinkel (SW1, SW2) der Seitenwaschbürste (18, 19) und insbesondere eines oberen Bürstenteils (41) an die Neigung des Fahrzeughecks (62) und/oder einer Fahrzeugfront (61) eines zu behandelnden Fahrzeugs (60) angepasst wird.

Die Erfassungsvorrichtung kann alternativ oder zusätzlich dazu ausgebildet sein, eine Schrägstellung des Fahrzeugs (60) relativ zur Ein- oder Durchfahrtrichtung der Behandlungsanlage (10) zu erfassen. Die Bürstenschwenkvorrichtung (20) und insbesondere die Neigung der Führungsschiene (23) können bevorzugt in Abhängigkeit von dem erfassten Wert der Schrägstellung gesteuert oder geregelt werden.

Die Seitenwaschbürste (18,19) gemäß der vorliegenden Offenbarung ist bevorzugt als Doppel-Knickbürste mit einer Mechanik gemäß Figur 3 und der zugehörigen Beschreibung ausgebildet. Alternativ kann die Seitenwaschbürste (18, 19) als einfache Knickbürste ausgebildet sein, deren unterer Bürstenabschnitt (42) lediglich um die erste Knickachse (K1) schwenkbar ist.

Die oberen und unteren Lagerpunkte der Schwenkhebel (33, 34) der Doppel-Parallelogramm-Führung (30) sind bevorzugt gegenüber dem oberen Schwenk-Gelenk (16) und dem unteren Knick-Gelenk (40) jeweils orthogonal beabstandet angeordnet, insbesondere bei einheitlichen Abständen. Die oberen und unteren Lagerpunkte der Schwenkhebel (33, 34) können beispielsweise durch Kugelgelenke oder Kardangelenke gebildet sein.

Abwandlungen der Erfindung sind in verschiedener Weise möglich. Insbesondere sind alle zu den Ausführungsbeispielen beschriebenen, gezeigten, beanspruchten oder in sonstiger Weise offenbarten Merkmale beliebig miteinander kombinierbar oder vertauschbar.

Nachfolgend sind besonders bevorzugte und jeweils separat oder in beliebiger Kombination nutzbare Merkmale der Bürstenschwenkvorrichtung zum Ausschwenken mindestens einer Seitenwaschbürste (18, 19) einer Behandlungsanlage (10) für Fahrzeuge (60) gegenüber der Vertikalrichtung angegeben.

Die Beweglichkeit der Führungsschiene (23) kann dafür bestimmend sein, in welcher Orientierung entlang der Längsrichtung der Behandlungsanlage (10) ein Ausschwenken möglich bzw. in gesteuerter Weise erzeugbar ist. Die Führungsschiene (23) kann gegenüber einer Ausgangslage ohne Ausschwenken (I) in einer ersten Richtung beweglich sein, um die Seitenwaschbürste (18, 19) zu der Einfahrtseite (IN) der Behandlungsanlage (10) hin gerichtet auszuschwenken. Alternativ oder zusätzlich kann die Führungsschiene (23) gegenüber einer Ausgangslage ohne Ausschwenken (I) in einer zweiten Richtung beweglich sein, um die Seitenwaschbürste (18, 19) von der Einfahrtseite (IN) weg gerichtet auszuschwenken. Die Ausgangslage der Führungsschiene ohne Ausschwenken ist eine unbelastete Lage der Führungsschiene, in der keine Ausschwenkbewegung der Bürste vorliegt. Mit anderen Worten korrespondiert die Ausgangslage der Führungsschiene mit einer Vertikallage der Bürste.

Eine Bewegung der Führungsschiene (23) kann fest / starr mit einer Schwenkbewegung der Bürste gekoppelt sein. Dies kann insbesondere dadurch erreicht werden, dass die Führungsschiene (23) das Hebelelement (21) in beiden Bewegungsrichtungen mitnimmt (vgl. C-Profil der Führungsschiene in Figur 1). Alternativ kann vorgesehen sein, dass die Führungsschiene (23) derart ausgebildet ist, dass sie das Hebelelement (21) beim Ausschwenken der Seitenwaschbürste (18, 19) nur einseitig mitnimmt. Ein nur einseitiges Mitnehmen kann über die gesamte Länge der Führungsschiene oder nur in einem oder mehreren Teilbereichen vorgesehen sein.

Nachfolgend sind besonders bevorzugte und jeweils separat oder in beliebiger Kombination nutzbare Merkmale der Behandlungsanlage angegeben.

Die Antriebe (24, 25) zum Bewegen der Führungsschiene (23) sind bevorzugt als Linearantriebe ausgebildet, insbesondere als Hydraulik- oder Pneumatik-Zylinder.

Mindestens eine die Seitenwaschbürste (18, 19) der Behandlungsanlage kann als Knick-Bürste mit mindestens zwei separaten Bürstenabschnitten (41, 42) und einem dazwischen angeordneten Knick-Gelenk (40) ausgebildet sein. Besonders bevorzugt ist hierbei ein unterer Bürstenabschnitt (42) um eine im Wesentlichen parallele Knickachse (K1) des Knick-Gelenks (40) gegenschwenkbar (in Gegenrichtung schwenkbar), wenn die Seitenwaschbürste (18, 19) um die quer zum Fahrzeug (60) verlaufende Achse (A1) ausgeschwenkt wird. Mit anderen Worten ist also ein unterer Bürstenabschnitt (42) bei einem Ausschwenken der Seitenwaschbürste (18, 19) um die quer zum Fahrzeug (60) verlaufende Achse (A1) um eine im Wesentlichen parallele Knickachse (K1) des Knick-Gelenks (40) gegenschwenkbar.

Mindestens eine Seitenwaschbürste (18, 19) der Behandlungsanlage kann weiterhin bevorzugt als Doppel-Knickbürste ausgebildet sein, bei der ein unterer Bürstenabschnitt (42) gegenüber einem oberen Bürstenabschnitt (41) um zwei im Wesentlichen orthogonale Knick-Achsen (K1, K2) schwenkbar ist.

Eigenständig offenbart ist eine Seitenwaschbürste für eine Behandlungsanlage (10) für Fahrzeuge, die als Knick-Bürste ausgebildet ist und bei der ein unterer Bürstenteil (42) gegenüber einem oberen Bürstenteil (41) um ein Knick-Gelenk (41) mit zwei im Wesentlichen orthogonalen Knick-Achsen (K1, K2) schwenkbar ist. Diese Seitenwaschbürste kann bevorzugt eine Doppel-Parallelogramm-Führung (30) umfassen.

In einer bevorzugten Ausführungsvariante der Seitenwaschbürste kann ein unterer Bürstenträger (32) gegenüber einem oberen Bürstenträger (31) um die erste Knick-Achse (K1) des Knick-Gelenks (41) durch einen ersten Schwenkhebel (33) sowie um die zweite Knick-Achse (K2) durch einen zweiten Schwenkhebel (34) schwenkbar sein. Hierbei können weiterhin bevorzugt die beiden Schwenkhebel (33, 34) im Wesentlichen parallel zum oberen Bürstenträger (31) und innerhalb des oberen Bürstenteils (41) verlaufen. Alternativ oder zusätzlich können der obere Bürstenträger (31) sowie die beiden Schwenkhebel (33, 34) jeweils zueinander orthogonal beabstandet an einem Laufschlitten (15) der Behandlungsanlage (10) drehbar gelagert sein.

### BEZUGSZEICHENLISTE

- 10: Behandlungsanlage / Waschanlage
- 11: Portal
- 12: Portalsäule
- 13: Portaltraverse
- 14: Laufschiene
- 15: Laufkatze / Schlitten
- 16: Schwenk-Gelenk
- 17: Bürsten-Drehantrieb / Motor / Direktantrieb
- 18: Erste Waschbürste
- 19: Zweite Waschbürste
- 20: Bürstenschwenkvorrichtung
- 21: Hebelelement
- 22: Eingriffselement / Laufrolle
- 23: Führungsschiene
- 24: Erster Antrieb
- 25: Zweiter Antrieb
- 26: Schwenkantrieb
- 27: Erste Schwenkführung
- 28: Zweite Schwenkführung
- 30: Doppel-Parallelogramm-Führung
- 31: Oberer Bürstenträger
- 32: Unterer Bürstenträger
- 33: Erster Schwenkhebel
- 34: Zweiter Schwenkhebel

- 40: Knick-Gelenk
- 41: Oberer Bürstenabschnitt
- 42: Unterer Bürstenabschnitt
- 60: Fahrzeug
- 61: Fahrzeugfront
- 62: Fahrzeugheck

- A1: Erste Schwenkachse, quer zum Fahrzeug
- A2: Zweite Schwenkachse, längs zum Fahrzeug

- IN: Einfahrtseite / Einfahrtrichtung

- K1: Knickachse quer zum Fahrzeug
- K2: Knickachse längs zum Fahrzeug

- SK1: Schwenkkurve um A1
- SK2: Schwenkkurve um A2

- SW1: Erster Schwenkwinkel
- SW2: Zweiter Schwenkwinkel

- I: Ausgangslage ohne Ausschwenken
- II: Lage mit Ausschwenken

## Patentansprüche

1. Bürstenschwenkvorrichtung zum Ausschwenken mindestens einer Seitenwaschbürste (18, 19) einer Behandlungsanlage (10) für Fahrzeuge (60) gegenüber der Vertikalrichtung, wobei die Seitenwaschbürste (18, 19) durch einen Laufschlitten (15) quer zum Fahrzeug (60) seitenbeweglich an einer Laufschiene (14) gelagert ist, und wobei die Seitenwaschbürste (18, 19) gegenüber dem Laufschlitten (15) zumindest um eine erste im Wesentlichen quer zum Fahrzeug (60) verlaufende Schwenkachse (A1) ausschwenkbar gelagert ist, **dadurch gekennzeichnet , dass** die Bürstenschwenkvorrichtung (20) umfasst:
- mindestens eine gesteuert bewegbare Führungsschiene (23), die sich im Wesentlichen quer zum Fahrzeug (60) erstreckt und entlang einer Schwenkkurve (SK1) bewegbar ist, die um die erste Schwenkachse (A1) verläuft;
- ein auf die Seitenwaschbürste (18, 19) wirkendes Hebelelement (21), das derart mit der Führungsschiene (23) gekoppelt ist, dass eine Bewegung der Führungsschiene (23) entlang der Schwenkkurve (SK1) eine Mitnahme des Hebelelements (21) und ein Ausschwenken der Seitenwaschbürste (18, 19) um die erste Schwenkachse (A1) bewirkt.

2. Bürstenschwenkvorrichtung nach Anspruch 1, wobei die Bürstenschwenkvorrichtung (10) zwei steuerbare Antriebe (24, 25) aufweist.

3. Bürstenschwenkvorrichtung nach Anspruch 2, wobei die Führungsschiene (23) gegenüber der ersten Schwenkachse (A1) bzw. gegenüber einer Portaltraverse (13) neigbar gelagert ist, wobei bevorzugt die Antriebe (24, 25) separat steuerbar sind, insbesondere um die Führungsschiene (23) gegenüber der ersten Schwenkachse (A1) zu neigen.

4. Bürstenschwenkvorrichtung nach einem der vorhergehenden Ansprüche, wobei die Seitenwaschbürste (18, 19) gegenüber dem Laufschlitten (15) um eine im Wesentlichen längs zum Fahrzeug (60) verlaufende zweite Schwenkachse (A2) ausschwenkbar gelagert ist und/oder wobei an dem Laufschlitten (15) ein steuerbarer Schwenkantrieb (26) vorgesehen ist, um die Seitenwaschbürste (18, 19) um eine im Wesentlichen längs zum Fahrzeug (60) verlaufende zweite Schwenkachse (A2) auszuschwenken.

5. Bürstenschwenkvorrichtung nach einem der vorhergehenden Ansprüche, wobei die Seitenwaschbürste (18, 19) als Knick-Bürste mit mindestens zwei Bürstenteilen (41, 42) und einem dazwischen angeordneten Knick-Gelenk (40) mit einer im Wesentlichen quer zum Fahrzeug (60) verlaufenden ersten Knick-Achse (K1) ausgebildet ist, und wobei die Bürstenschwenkvorrichtung (20) eine Parallelogramm-Führung aufweist, um beim Ausschwenken eines oberen Bürstenteils (41) um die erste Schwenkachse (A1) einen unteren Bürstenteil (42) um die erste Knick-Achse (K1) gegenzuschwenken.

6. Bürstenschwenkvorrichtung nach Anspruch 5, wobei das Knick-Gelenk (40) weiterhin mit einer zweiten im Wesentlichen längs zum Fahrzeug (60) verlaufenden Knick-Achse (K2) und die Parallelogramm-Führung als Doppel-Parallelogramm-Führung (30) ausgebildet ist, um beim Ausschwenken des oberen Bürstenteils (41) um die zweite Schwenkachse (A2) den unteren Bürstenteil (42) um die zweite Knick-Achse (K2) gegenzuschwenken.

7. Behandlungsanlage für Fahrzeuge (60), insbesondere Autowaschanlage, mit einem Portal (11) und mindestens einer durch einen Laufschlitten (15) an einer Laufschiene (14) seitenbeweglich gelagerten Seitenwaschbürste (18, 19), wobei die Seitenwaschbürste (18, 19) gegenüber dem Laufschlitten (15) zumindest um eine im Wesentlichen quer zum Fahrzeug (60) verlaufende erste Schwenkachse (A1) ausschwenkbar ist, **dadurch gekennzeichnet, dass** die Behandlungsanlage (10) eine Bürstenschwenkvorrichtung (20) gemäß einem der vorhergehenden Ansprüche aufweist.

8. Behandlungsanlage nach dem vorhergehenden Anspruch, wobei die Führungsschiene (23) in einer Ausgangslage ohne Ausschwenken (I) innerhalb oder direkt unterhalb einer Portaltraverse (13) der Behandlungsanlage (10) angeordnet ist.

9. Behandlungsanlage nach einem der vorhergehenden Ansprüche 7 bis 8, wobei die Führungsschiene (23) über Schwenkhebel (27, 28) am Portal (10) gelagert ist, insbesondere über jeweils einen Schwenkhebel (27, 28) an je einer Stirnseite der Laufschiene (14) .

10. Behandlungsanlage nach einem der vorhergehenden Ansprüche 7 bis 9, wobei die Antriebe (24, 25) zum Bewegen der Führungsschiene (23) an den Stirnenden der Führungsschiene (23) angeordnet sind und sich insbesondere jeweils an einer Portalsäule (12) abstützen.

11. Behandlungsanlage nach einem der vorhergehenden Ansprüche 7 bis 10, wobei die mindestens eine Seitenwaschbürste (18, 19) auf einer Einfahrtsseite (IN) des Portals (11) angeordnet ist.

12. Behandlungsanlage nach einem der vorhergehenden Ansprüche 7 bis 11, wobei die Führungsschiene (23) gegenüber der im Wesentlichen quer zum Fahrzeug (60) verlaufenden Achse (A1) neigbar ist.

13. Behandlungsanlage nach einem der vorhergehenden Ansprüche 7 bis 12, wobei die Behandlungsanlage (10) eine Erfassungsvorrichtung zur Erfassung einer Fahrzeugkontur aufweist, und wobei die Bürstenschwenkvorrichtung (20) derart gesteuert wird, dass ein Schwenkwinkel (SW1, SW2) der Seitenwaschbürste (18, 19), insbesondere eines oberen Bürstenteils (41), an die Neigung des Fahrzeughecks (61) eines zu behandelnden Fahrzeugs (60) angepasst wird.

14. Behandlungsanlage nach einem der vorhergehenden Ansprüche 7 bis 13, wobei die Behandlungsanlage (10) eine Erfassungsvorrichtung zur Erfassung der Schrägstellung eines Fahrzeugs (60) zur der Ein- oder Durchfahrtrichtung der Behandlungsanlage (10) aufweist, und wobei über der Quererstreckung des Fahrzeugs (60) ansteigende oder abfallende Schwenkwinkel (SW1, SW2) vorgesehen werden, um die Seitenwaschbürste (18, 19) der Schrägstellung des Fahrzeughecks (61) oder der Fahrzeugfront (62) nachzuführen.

15. Behandlungsanlage nach einem der vorhergehenden Ansprüche 7 bis 14, wobei die Behandlungsanlage eine Seitenwaschbürste (18, 19) aufweist, die als Knick-Bürste ausgebildet ist, bei der ein unterer Bürstenteil (42) gegenüber einem oberen Bürstenteil (41) um ein Knick-Gelenk (41) mit zwei im Wesentlichen orthogonalen Knick-Achsen (K1, K2) schwenkbar ist, und wobei die Seitenwaschbürste (18, 19) insbesondere eine Doppel-Parallelogramm-Führung (30) umfasst.

## Claims

1. Brush pivoting device for pivoting at least one lateral washing brush (18, 19) of a treatment plant (10) for vehicles (60) in relation to the vertical direction, wherein the lateral washing brush (18, 19) by way of a carriage slide (15) on a running rail (14) is mounted so as to be laterally movable transversely to the vehicle (60), and wherein the lateral washing brush (18, 19) in relation to the carriage slide (15) is mounted so as to be pivotable at least about a first pivot axis (A1) that runs so as to be substantially transverse to the vehicle (60), **characterized in that** the brush pivoting device (20) comprises:
- at least one guide rail (23) which is movable in a controlled manner and which extends so as to be substantially transverse to the vehicle (60) and is movable along a pivot curve (SK1) which runs about the first pivot axis (A1);
- a lifting element (21) which acts on the lateral washing brush (18, 19) and which is coupled to the guide rail (23) in such a manner that a movement of the guide rail (23) along the pivot curve (SK1) causes an entrainment of the lifting element (21) and a pivoting of the lateral washing brush (18, 19) about the first pivot axis (A1).

2. Brush pivoting device according to Claim 1, wherein the brush pivoting device (10) has two controllable drives (24, 25).

3. Brush pivoting device according to Claim 2, wherein the guide rail (23) is mounted so as to be capable of being inclined in relation to the first pivot axis (A1), or in relation to a first gantry cross beam (13) wherein the drives (24, 25) are preferably separately controllable, in particular so as to incline the guide rail (23) in relation to the first pivot axis (A1).

4. Brush pivoting device according to one of the preceding clams, wherein the lateral washing brush (18, 19) in relation to the carriage slide (15) is mounted so as to be pivotable about a second pivot axis (A2) which runs so as to be substantially longitudinal to the vehicle (60), and/or wherein a controllable pivot drive (26) for pivoting the lateral washing brush (18, 19) about a second pivot axis (A2) which runs so as to be substantially longitudinal to the vehicle (60) is provided on the carriage slide (15).

5. Brush pivoting device according to one of the preceding claims, wherein the lateral washing brush (18, 19) is configured as a knuckle brush having at least two brush parts (41, 42) and a knuckle joint (40) which is disposed therebetween and has a first knuckle axis (K1) which runs so as to be substantially transverse to the vehicle (60), and wherein the brush pivoting device (20) has a parallelogram guide so as to pivot a lower brush part (42) about the first knuckle axis (K1) in a manner counter to an upper brush part (41) when the latter is pivoted about the first pivot axis (A1).

6. Brush pivoting device according to Claim 5, wherein the knuckle joint (40) is furthermore configured having a second knuckle axis (K2) which runs so as to be substantially longitudinal to the vehicle (60), and the parallelogram guide is configured as a twin-parallelogram guide (30) so as to pivot the lower brush part (42) about the second knuckle axis (K2)in a manner counter to the upper brush part (41) when the latter is pivoted about the second pivot axis (A2).

7. Treatment plant for vehicles (60), in particular a car wash plant, having a gantry (11) and at least one lateral washing brush (18, 19) which by way of a carriage slide (15) on a running rail (14) is mounted so as to be laterally movable, wherein the lateral washing brush (18, 19) in relation to the carriage slide (15) is pivotable at least about a first pivot axis (A1) which runs so as to be substantially transverse to the vehicle (60), **characterized in that** the treatment plant (10) has a brush pivoting device (20) according to one of the preceding claims.

8. Treatment plant according to the preceding claim, wherein the guide rail (23) in an initial position without pivoting (I) is disposed within or directly below a gantry cross beam (13) of the treatment plant (10).

9. Treatment plant according to one of preceding Claims 7 to 8, wherein the guide rail (23) is mounted on the gantry (10) by way of pivot levers (27, 28), in particular by way of in each case one pivot lever (27, 28) on each one of the end sides of the running rail (14).

10. Treatment plant according to one of preceding Claims 7 to 9, wherein the drives (24, 25) for moving the guide rail (23) are disposed on the end sides of the guide rail (23) and are in particular in each case supported on one gantry pillar (12).

11. Treatment plant according to one of preceding Claims 7 to 10, wherein the at least one lateral washing brush (18, 19) is disposed on an entry side (IN) of the gantry (11).

12. Treatment plant according to one of preceding Claims 7 to 11, wherein the guide rail (23) is capable of being inclined in relation to the axis (A1) which runs so as to be substantially transverse to the vehicle (60).

13. Treatment plant according to one of preceding Claims 7 to 12, wherein the treatment plant (10) has a detection device for detecting a vehicle contour, and wherein the brush pivoting device (20) is controlled in such a manner that a pivot angle (SW1, SW2) of the lateral washing brush (18, 19), in particular of an upper brush part (41), is adapted to the inclination of the vehicle rear (61) of a vehicle (60) to be treated.

14. Treatment plant according to one of preceding Claims 7 to 13, wherein the treatment plant (10) has a detection device for detecting the oblique position of a vehicle (60) in relation to the entry or passing direction of the treatment plant (10), and wherein pivot angles (SW1, SW2) that ascend or descend across the transverse extent of the vehicle (60) are provided so as to guide the lateral washing brush (18, 19) to follow the oblique position of the vehicle rear (61) or the vehicle front (62).

15. Treatment plant according to one of preceding Claims 7 to 14, wherein the treatment plant has a lateral washing brush (18, 19) which is configured as a knuckle brush in which a lower brush part (42) in relation to an upper brush part (41) is pivotable about a knuckle joint (41) having two substantially orthogonal knuckle axes (K1, K2), and wherein the lateral washing brush (18, 19) in particular comprises a twin-parallelogram guide (30) .

## Revendications

1. Dispositif de pivotement de brosse pour faire pivoter au moins une brosse de lavage latérale (18, 19) d'une installation de traitement (10) pour véhicules (60) par rapport à la direction verticale, la brosse de lavage latérale (18, 19) étant supportée par un chariot roulant (15) de manière déplaçable latéralement transversalement au véhicule (60) sur un rail de roulement (14), et la brosse de lavage latérale (18, 19) étant supportée par rapport au chariot roulant (15) de manière à pouvoir pivoter au moins autour d'un premier axe de pivotement (A1) s'étendant essentiellement transversalement au véhicule (60), **caractérisé en ce que** le dispositif de pivotement de brosse (20) comprend :
- au moins un rail de guidage (23) déplaçable de manière commandée, qui s'étend essentiellement transversalement au véhicule (60) et qui peut être déplacé le long d'une courbe de pivotement (SK1) qui s'étend autour du premier axe de pivotement (A1) ;
- un élément de levier (21) agissant sur la brosse de lavage latérale (18, 19), qui est accouplé au rail de guidage (23) de telle sorte qu'un déplacement du rail de guidage (23) le long de la courbe de pivotement (SK1) provoque un entraînement de l'élément de levier (21) et un pivotement de la brosse de lavage latérale (18, 19) autour du premier axe de pivotement (A1) .

2. Dispositif de pivotement de brosse selon la revendication 1, le dispositif de pivotement de brosse (10) présentant deux entraînements commandables (24, 25) .

3. Dispositif de pivotement de brosse selon la revendication 2, dans lequel le rail de guidage (23) est supporté de manière à pouvoir être incliné par rapport au premier axe de pivotement (A1) ou par rapport à une traverse de portique (13), les entraînements (24, 25) pouvant de préférence être commandés séparément, en particulier afin d'incliner le rail de guidage (23) par rapport au premier axe de pivotement (A1) .

4. Dispositif de pivotement de brosse selon l'une quelconque des revendications précédentes, dans lequel la brosse de lavage latérale (18, 19) est supportée par rapport au chariot roulant (15) de manière à pouvoir pivoter autour d'un deuxième axe de pivotement (A2) s'étendant essentiellement longitudinalement par rapport au véhicule (60) et/ou dans lequel un entraînement de pivotement commandable (26) est prévu au niveau du chariot roulant (15), afin de faire pivoter la brosse de lavage latérale (18, 19) autour d'un deuxième axe de pivotement (A2) s'étendant essentiellement longitudinalement par rapport au véhicule (60).

5. Dispositif de pivotement de brosse selon l'une quelconque des revendications précédentes, dans lequel la brosse de lavage latérale (18, 19) est réalisée sous forme de brosse flexible avec au moins deux parties de brosse (41, 42) et une articulation à flexion disposée entre elles (40), avec un premier axe de flexion (K1) s'étendant essentiellement transversalement au véhicule (60), et le dispositif de pivotement de brosse (20) présentant un guide à parallélogramme afin de faire pivoter dans le sens inverse une partie de brosse inférieure (42) autour du premier axe de flexion (K1), lors du pivotement d'une partie de brosse supérieure (41) autour du premier axe de pivotement (A1).

6. Dispositif de pivotement de brosse selon la revendication 5, dans lequel l'articulation à flexion (40) est en outre réalisée avec un deuxième axe de flexion (K2) s'étendant essentiellement longitudinalement par rapport au véhicule (60) et le guide à parallélogramme est réalisé sous forme de double guide à parallélogramme (30), afin de faire pivoter dans le sens inverse la partie de brosse inférieure (42) autour du deuxième axe de flexion (K2) lors du pivotement de la première partie de brosse supérieure (41) autour du deuxième axe de pivotement (A2).

7. Installation de traitement pour véhicules (60), en particulier installation de lavage de voitures, comprenant un portique (11) et au moins une brosse de lavage latérale (18, 19) supportée de manière déplaçable latéralement par un chariot roulant (15) sur un rail de roulement (14), la brosse de lavage latérale (18, 19) pouvant pivoter par rapport au chariot roulant (15) au moins autour d'un premier axe de pivotement (A1) s'étendant essentiellement transversalement au véhicule (60), **caractérisée en ce que** l'installation de traitement (10) présente un dispositif de pivotement de brosse (20) selon l'une quelconque des revendications précédentes.

8. Installation de traitement selon la revendication précédente, dans laquelle le rail de guidage (23) est disposé dans une position initiale sans pivotement (I) à l'intérieur, ou directement en dessous, d'une traverse de portique (13) de l'installation de traitement (10).

9. Installation de traitement selon l'une quelconque des revendications précédentes 7 et 8, dans laquelle le rail de guidage (23) est supporté par le biais de leviers pivotants (27, 28) sur le portique (10), en particulier par le biais d'un levier pivotant respectif (27, 28) sur chaque côté frontal du rail de roulement (14).

10. Installation de traitement selon l'une quelconque des revendications précédentes 7 à 9, dans laquelle les entraînements (24, 25) pour le déplacement du rail de guidage (23) sont disposés au niveau des extrémités frontales du rail de guidage (23) et s'appuient notamment à chaque fois sur une colonne de portique (12).

11. Installation de traitement selon l'une quelconque des revendications précédentes 7 à 10, dans laquelle l'au moins une brosse de lavage latérale (18, 19) est disposée sur un côté d'entrée (IN) du portique (11).

12. Installation de traitement selon l'une quelconque des revendications précédentes 7 à 11, dans laquelle le rail de guidage (23) peut être incliné par rapport à l'axe (A1) s'étendant essentiellement transversalement au véhicule (60).

13. Installation de traitement selon l'une quelconque des revendications précédentes 7 à 12, l'installation de traitement (10) présentant un dispositif de détection pour détecter un contour d'un véhicule, et le dispositif de pivotement de brosse (20) étant commandé de telle sorte qu'un angle de pivotement (SW1, SW2) de la brosse de lavage latérale (18, 19), en particulier d'une partie de brosse supérieure (41), soit adapté à l'inclinaison de l'arrière du véhicule (61) d'un véhicule à traiter (60).

14. Installation de traitement selon l'une quelconque des revendications précédentes 7 à 13, l'installation de traitement (10) présentant un dispositif de détection pour détecter la position d'inclinaison d'un véhicule (60) par rapport à la direction d'entrée ou de traversée de l'installation de traitement (10), et des angles de pivotement (SW1, SW2) montant ou descendant par rapport à l'étendue transversale du véhicule (60) étant prévus afin de faire suivre à la brosse de lavage latérale (18, 19) la position oblique de l'arrière du véhicule (61) ou de l'avant du véhicule (62).

15. Installation de traitement selon l'une quelconque des revendications précédentes 7 à 14, l'installation de traitement présentant une brosse de lavage latérale (18, 19) qui est réalisée sous forme de brosse flexible, une partie de brosse inférieure (42) pouvant pivoter par rapport à une partie de brosse supérieure (41) autour d'une articulation à flexion (41) avec deux axes de flexion (K1, K2) essentiellement orthogonaux, et la brosse de lavage latérale (18, 19) comprenant notamment un double guide à parallélogramme (30).
